# EUROPÄISCHE PATENTANMELDUNG

(11) **EP 1 837 376 A1**
(43) Veröffentlichungstag der Anmeldung: **26.09.2007**
(21) Anmeldenummer: 07002377.5
(22) Anmeldetag: 03.02.2007
(51) Int. Cl.: C08L 97/02, C08K 9/06

(54) **Verwendung eines Kompositwerkstoffs**

(30) Priorität: 20.03.2006 DE 102006013014
(71) Anmelder: REHAU AG + Co, 95111 Rehau (DE)
(72) Erfinder: Wolfrat, Robert, 95461 Goldkronach (DE)

(57) **Zusammenfassung**

Die vorliegende Erfindung gibt die Verwendung eines Kompositwerkstoffs für Fensferbauteile, der aus den Bestandteilen lignocellulosische Fasern und thermoplastischer Kunststoff besteht, wobei die lignocellulosischen Fasern mit einer wässrigen Zusammensetzung behandelt sind, die ein Organopolysiloxan umfassen, das zumindest ein wasserlösliches Aminoalkyltrialkoxysilan und zumindest ein wasserunlösliches Alkyltrialkoxysilan aufweist, als Werkstoff für die Herstellung von für den Fensterbau bestimmten Innenbauteilen und/oder Außenbauteilen und/oder Funktionsbauteilen an.

## Beschreibung

Die vorliegende Erfindung betrifft die Verwendung eines Kompositwerkstoffs aus Holz und thermoplastischen Kunststoffen für Fensterbauteile, wobei das lignocellulosische Material wie Holz in Form von Partikeln, beispielsweise als Holzmehl, Holzfasern oder Holzschnitzel, in Mischung mit einem thermoplastischen Kunststoff diesen Komposit- oder Verbundwerkstoff bildet.

Die US 4717742 beschreibt gattungsgemäß holzverstärkte thermoplastische Verbundwerkstoffe aus Holzzellstoff und Polyethylen oder isotaktischem Polypropylen, wobei der Kunststoff jeweils Maleinsäureanhydrid enthält. Zur Verbesserung der Haftung zwischen lignocellulosischen Fasern einerseits sowie Kunststoff andererseits werden die lignocellulosischen Fasern mit γ-Aminopropyltriethoxysilan in Lösungsmittel behandelt, das Lösungsmittel abdampfen gelassen und bei 105 °C getrocknet. Das Maleinsäureanhydrid dient als Kopplungsmittel zwischen des silanisierten Cellulosefasern und dem Kunststoff.

Gegenüber den bekannten Kompositwerkstoffen aus thermoplastischen Kunststoff und lignocellulosischen Fasern stellt sich der vorliegenden Erfindung die Aufgabe, die Verwendung eines Kompositwerkstoffs mit verbesserten Eigenschaften für Fensterbauteile anzugeben, wobei der Kompositwerkstoff insbesondere eine höhere Kerbschlagzähigkeit, ein verbessertes Elastizitätsmodul, eine höhere Zugfestigkeit sowie eine verringerte Wasseraufnahme aufweist und somit die mechanischen und tribologischen Eigenschaften der Fensterbauteile vorteilhaft verbessert, nahezu lösemittelfrei ist und gute Verarbeitungseigenschaften aufweist.

Die erfindungsgemäße Lösung dieser Aufgabe besteht in den kennzeichnenden Merkmalen des Anspruchs 1.
Vorteilhafte Aus- und Weiterbildungen der Erfindung sind in den Unteransprüchen angegeben.

Die Erfindung löst die vorgenannte Aufgabe dadurch, dass die Verwendung eines Kompositwerkstoff aus lignocellulosischen Fasern, durch Behandlung mit Silanen derivatisiert, wodurch einerseits eine haftvermittelnde Wirkung zwischen lignocellulosischen Fasern und thermoplastischem Kunststoff hergestellt ist und andererseits die lignocellulosischen Fasern hydrophobiert sind, und einem thermoplastischen Kunststoff für die Herstellung von Fensterbauteilen angegeben ist.

Der Kompositwerkstoff, bestehend aus einen thermoplastischen Kunststoff und lignocellulosischen Fasern, die durch Behandlung mit Silanen derivatisiert sind, zeichnet sich dadurch aus, daß einerseits eine haftvermittelnde Wirkung zwischen den lignocellulosischen Fasern und dem thermoplastischen Kunststoff hergestellt wird und andererseits die lignocellulosischen Fasern hydrophobiert sind.

Die lignocellulosischen Fasern werden durch eine Behandlung mit Organopolysiloxanen bzw. deren Copolymerisaten in einer Mischung auf Wasserbasis umgesetzt. Dadurch wird die Haftvermittlung zwischen lignocellulosischen Fasern und thermoplastischem Kunststoff im Kompositwerkstoff verbessert. Es werden dadurch sowohl die mechanisch-physikalischen Eigenschaften des Kompositwerkstoffs verbessert, als auch die Aufnahme von flüssigem und gasförmigem Wasser reduziert.

Nach diesem Verfahren kann im wesentlichen auf den Einsatz von organischen Lösemitteln verzichtet werden, es sind somit lösemittelfreie Bauteile, die als Fensterbauteile eingesetzt werden können, herstellbar.
Auch die Verarbeitung des Kompositwerkstoffs für die Herstellung dieser Fensterbauteile wird nicht nachteilig beeinflußt.

Der Gehalt von lignocellulosischen Fasern beträgt im erfindungsgemäßen Kompositwerkstoff beispielsweise 10 bis 90 Gewichtsprozent, wobei als lignocellulosische Fasern Holzmehle, Holzspäne, und/oder Holzschnitzel aus Laub- und Nadelhölzern und Gemische daraus eingesetzt werden können.

Als thermoplastischer Kunststoff eignet sich insbesondere Polyethylen, Polypropylen, vorzugsweise isotaktisches Polypropylen, Blockpolymere und Mischpolymere aus Polyethylen- und Polypropyleneinheiten, aber auch Acrylnitril-Butadien-Styrol (ABS) und dessen Blockpolymere.

Die lignocellulosischen Fasern werden durch eine Behandlung mit Organopolysiloxanen bzw. deren Copolymerisaten in einer Mischung auf Wasserbasis umgesetzt.
Dies wird im folgenden näher erläutert:

Die erfindungsgemäß einzusetzenden Organopolysiloxane sind erhältlich durch Mischen wasserlöslicher Aminoalkyl-Alkoxysilane , die die allgemeine Formel I

R-Sᵢ(R¹)_{y}(OR^{1*})_{3-y} (I)

aufweisen, mit nicht wasserlöslichen Alkyltrialkoxysilanen, die die allgemeine Formel II

R²-Si(OR^{1**})₃ (II)

aufweisen, optional zusätzlich in Kombination mit nicht wasserlöslichen Dialkyldialkoxysilanen der allgemeinen Formel III

AA'-Si(OR^{1***})₂ (III).

Dabei ist R eine aminofunktionale Gruppe, aliphatisch verzweigt oder unverzweigt oder aromatisch mit 2 bis 8 Kohlenstoffatomen, die primäre, sekundäre, tertiäre, bevorzugt quartäre aliphatische oder aromatische Aminogruppen enthält oder die allgemeine Formel IV aufweisen kann:

[Z_{(f+9+h)}]^{(f+9+h)-}[NH_{2+f}(CH₂)_{b}(NH_{g+1})_{c}(CH₂)_{d}(NHₕ₊₁)₆(CH₂)ᵢ(CH₂)ᵢ]^{(f+g+h)+} (IV),

bei der b, d und i unabhängig 0 bis 3 sind, c, e, f, g und h unabhängig 0 bis 1 sind und b + d + i = 0 ist, für b = 0 auch c = 0 ist, für d = 0 auch e = 0 ist, für i = 0 auch e = 0 ist und für d = i = 0 auch c = 0 ist. Dabei ist Z ein einwertiger anorganischer oder organischer Säurerest. R¹, R^{1*}, R^{1**} und R^{1***} sind unabhängig ein Methyl- oder Ethylrest, R² ein linearer, zyklischer oder verzweigter Alkylrest mit 1 bis 8 Kohlenstoffatomen, A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und y 0 oder 1 ist. Vorzugsweise beträgt das Molverhältnis von Verbindungen der Formel I zur Summe derjenigen der Formeln II und III zwischen 0 und 2.

In bevorzugter Ausführungsform ist das wasserlösliche Aminoalkylalkoxysilan 3-Aminopropyltriethoxysilan und das wasserunlösliche Alkyltrialkoxysilan Isobutyltrialkoxysilan.

Das Organopolysiloxan, das aus wasserlöslichem Aminoalkylalkoxysilan und zumindest einem wasserunlöslichen Alkyltrialkoxysilan, optional mindestens einem weiteren wasserunlöslichen Dialkyldialkoxysilan besteht, wird vorzugsweise unter Säurekatalyse hergestellt. Dabei bedeutet Säurekatalyse vorzugsweise, dass der pH- Wert einen Wert zwischen 1 bis 8 aufweist, bevorzugt 3 bis 5.

In besonders bevorzugter Ausführungsform wird das Organopolysiloxan auf Wasserbasis im Wesentlichen frei von Alkoholen eingesetzt, wobei das Organopolysiloxan herstellbar ist durch Mischen des wasserlöslichen Aminoalkoxysilans mit dem wasserunlöslichen Dialkyldialkoxysilan in Wasser, Einstellen des pH-Werts auf einen Wert zwischen 1 und 8, vorzugsweise 3 bis 5 und Entfernen von Alkohol, vorzugsweise durch Vakuumdestillation. Für die Säurekatalyse bzw. zum Einstellen des pH-Werts können anorganische oder organische Säuren eingesetzt werden, vorzugsweise Ameisensäure oder Essigsäure.

Eine bevorzugte, wasserbasierte Organopolysiloxan- Zusammensetzung ist aus EP 0 716 128 A2 bekannt und unter dem Namen Dynasilan® von der Degussa AG, Deutschland, erhältlich.

Es ist bevorzugt, dass die Behandlung der lignocellulosischen Fasern über eine längere Zeitdauer stattfindet, beispielweise über zwei Stunden unter Bewegung. Es ist bevorzugt, dass die Silanisierung der lignocellulosischen Fasern bei von ca. 40 bis 70 °C, bevorzugt 40 °C durchgeführt wird, was zu einer Erhöhung der in das lignocellulosische Material eingetragenen Menge an Organopolysiloxan führt. Weiterhin ist bevorzugt, dass eine wässrige Formulierung der erfindungsgemäßen Organopolysiloxane bei der Behandlung einen pH-Wert von 3 bis 4 aufweist, beispielsweise durch Ameisensäure eingestellt, und durch längeres Mischen der wässrigen Gebrauchslösung vollständig hydrolysiert ist.

Alternativ kann eine organopolysiloxanhaltige Zusammensetzung, vorzugsweise auf Wasserbasis, hergestellt werden durch Mischen wasserlöslicher Aminoalkylalkoxysilane der allgemeinen Formel I:

R-Si(R¹)_{y}(OR^{1*})_{3-y} (I)

im molaren Verhältnis von > 0 bis maximal 2 mit nicht wasserlöslichen Aminoalkoxysilanen der allgemeinen Formel II

R²-Si(OR^{1**})₃ (II),

wobei R eine aminofunktionelle organische Gruppe der allgemeinen Formel III

[Z_{(f+c·f*)}]^{(f+c·f*)-}[A_{d}NH⁻_{(2+f-d)} [(CH₂)ₐNA¹ₑH⁻ _{(1-e+f*)}]_{c}(CH₂)_{b}]^{(f+c·f)+} (III)

darstellt, bei der a und b 1 bis 6 sind, c 0 bis 6 ist, d und e 0 bis 2 sind, f und f* 0 bis 1 sind, A und A¹ einen Benzyl- oder Vinylbenzylrest darstellen, N Stickstoff ist und Z ein einwertiger anorganischer oder organischer Säurerest ist,
wobei R¹, R^{1*}, R^{1**} einen Methyl- oder Ethylrest und
R² einen linearen, cyclischen oder verzweigten Alkylrest mit 1 bis 6 Kohlenstoffatomen oder eine Ureido- Alkylgruppe der allgemeinen Formel IV darstellt:

NH₂-CO-NH-(CH₂)_{b}- (IV)

und y 0 bis 1 ist,
anschließendes Versetzen des Gemischs mit Wasser,
Einstellen des pH-Wertes auf einen Wert zwischen 1 und 8, und
Entfernen des vorhandenen und/oder bei der Umsetzung entstehenden Alkohols.

Als lignocellulosische Fasern für den Kompositwerkstoff kommen Fasern/Späne - wie beispielsweise Fichtenholzspäne - in einer Größenordnung von 5 µm bis 5 mm Faserlänge in Frage. Die Auswahl der Faserlänge richtet sich dabei nach der Verwendung des Fensterbauteils innerhalb und/oder außerhalb eines Gebäudes.

Die Herstellung des Kompositwerkstoffs, bestehend aus silanisierten Holzspänen, insbesondere Fichtenholzspänen, und thermoplastischen Kunststoff, wie z. B. granuliertes oder pulverförmiges Polypropylen, erfolgt beispielsweise durch Mischen und mechanisches Kneten in aus dem Stand der Technik bekannten Materialverarbeitungsvorrichtungen/anlagen der Kunststofftechnik.

Der derart hergestellte Kompositwerkstoff wird als Grundstoff für die Herstellung von Fensterbauteilen verwendet.

Der Kompositwerkstoff, bestehend aus silanisiertem lignocellulosischen Material und einem thermoplastischen Kunststoff, kann vorteilhaft noch mit Zusatzstoffen versehen werden, die seine physikalisch-technischen Eigenschaften im Hinblick auf die Erfordernisse der unterschiedlichen daraus hergestellten Fensterbauteile und der Verarbeitung dazu verbessern.

Als Zusatzstoffe eignen sich:
Füllstoffe, Nanopartikel, Pigmente, Leitfähigkeitsadditive, Treibmittel bzw. Schaumbildner, Verarbeitungshilfsstoffe, Thermostabilisatoren, externe und interne Gleitmittel bzw. Fließmittel, Lichtschutzmittel, Flammschutzmittel, Schlagzähmodifikatoren, Antioxidantien, Nukleierungsmittel bzw. Keimbildner, Weichmacher, Antistatika, antimikrobiell wirkende Stoffe, anorganische Fasern, Riechstoffe.
Es sind auch Mischkombinationen der Zusatzstoffe untereinander in dem Kompositwerkstoff verwendbar.

Als Füllstoffe lassen sich mineralische Füllstoffe einsetzen. Beispiele sind Calciumcarbonat, d.h. Kreide, Kalkstein, Marmor, Dolomit; Silikate (auch Schichtsilikate) des Natriums, Kaliums, Calciums, Magnesiums (Talkum) und Aluminiums, Eisens, Zirkons; Kieselsäure; Metallhydroxide wie beispielsweise Magnesiumhydroxid und Aluminiumhydroxid. Dabei sind die Füllstoffe in unterschiedlichen Formen ausgeprägt, wie z.B. stäbchenförmig, blattförmig, faserförmig oder sphärolithisch und dem silanisierten lignocellulosischem und/oder dem thermoplastischen Kunststoff beigemischt, so daß eine Verarbeitung des erfindungsgemäßen Kompositwerkstoffs mittels der vorgenannten Herstellungsverfahren für die Fensterbauteile erfolgen kann.
Die jeweiligen Füllstoffe dienen unter anderem zur Erhöhung des E-Moduls oder zur gezielten Einstellung der Materialhärte für bspw. Fensterprofile.

Es können auch nanoförmige mineralische Füllstoffe mit einer Partikelgröße von kleiner 1 µm gezielt zur Elastizitätseinstellung des Kompositwerkstoffs eingesetzt werden, wie dies beispielsweise bei stark beanspruchten Fensterbauteilen notwendig ist.

Weiterhin werden Pigmente, umfassend Ruß, Titandioxid, Eisenoxid, beschichtetem Glimmer, spinellartigen Pigmentverbindungen sowie Metallkomplexverbindungen eingesetzt.

Ruß dient dabei beispielsweise auch dazu, die elektrischen Eigenschaften von Oberflächen, bestehend aus dem Kompositwerkstoff, spezifisch hinsichtlich ihres elektrischen Flächenwiderstandverhaltens einzustellen. Beispiele hierfür sind insbesondere Fensterbauteile, bei denen elektrostatische Ladungen abzuführen sind.
In diesem Zusammenhang wurde auch erkannt, daß durch die Zugabe von Leitfähigkeitsadditiven, wie Graphit oder Metallpartikel, es möglich ist, die für bestimmte Fensterbauteile notwendige abschnittsweise elektrische Leitfähigkeit zur Abschirmung von elektrischer Streustrahlung vorteilhaft vorzusehen.
Das silanisierte lignocellulosische Material in Verbindung mit dem thermoplastischen Kunststoff sowie das in die Matrix eingebrachte Leitfähigkeitsadditiv gestatten die Ausbildung hochdotierter Leitfähigkeitsbereiche/-zonen, neben Bereichen/Zonen mit geringerer Leitfähigkeit (Isolationsbereiche). Dadurch lassen sich gezielt leitfähige Bereiche entlang einer Oberfläche der Fensterbauteile einstellen und bspw. elektrostatische Aufladungsphänomene bei Fensterbauteilen vorteilhaft reduzieren.

Insbesondere geschäumte Bauteile lassen sich durch anorganische und/oder organische Schaumbildner wie beispielsweise Azodicarbonamid bzw. Natriumhydrogencarbonat herstellen. Hierdurch können in Fensterbauteilen Abschnitte erzeugt werden, die eine Isolationswirkung im Hinblick auf die Wärmeleitung und/oder der Leitung von Schall oder die Absorption von einwirkenden Kräften ermöglichen.

Zur besseren Verarbeitung des Kompositwerkstoffs zu Fensterbauteilen können auch Verarbeitungshilfsstoffe, wie hochmolekulare Acryl-Polymere, zugesetzt werden, sowie Stabilisatoren, wobei beispielsweise ein organisches Zinncarboxylat und/oder ein Zinnmercaptid und/oder eine Barium-Zink-Verbindung und/oder Tris(nonylphenyl)phosphit und/oder Tris(2,4-di-tert-butylphenyl)phosphit zum Einsatz kommt.

Für die Herstellung von Fensterbauteilen im Extrusionsverfahren können Fließ- und Gleitmittel, wie Metallsalze, Fettsäuren und/oder ein Wachse (Paraffin) und/oder Fettsäureester verwendet werden.

Weiterhin können dem Kompositwerkstoff Lichtschutzmittel, wie HALS-Stabilisatoren (sterisch gehinderte Amin-Lichtschutzmittel) zugegeben werden.

Durch ein Lichtschutzmittel im Werkstoff wird erreicht, daß die physikalisch-chemischen Eigenschaften von Fensterbauteilen, die im Außeneinsatz der Einstrahlung von Licht ausgesetzt sind, erhalten bleiben oder sich zumindest zeitlich verzögert verschlechtern.

Es wurde weiterhin erfindungsgemäß erkannt, daß Flammschutzmittel, wie Deca-, Octa-, Pentabromdiphenylether oder Hexabromdiphenoxyethan oder Tetrabromphthalsäureanhydrid oder Tetrabromphthalsäurediol und -polyether oder Tetrabrombisphenol A (TBBA) für Fensterbauteile verwendet werden können, die besonderen brandschutztechnischen Anforderungen unterliegen. Hierzu werden die entsprechenden Zusätze dem Kompositwerkstoff zugemischt.

Schlagzähmodifikatoren, wie Acrylate, eignen sich im Kompositwerkstoff für mechanisch beanspruchte Bauteile, die damit wesentlich widerstandsfähiger werden.

Es ist auch möglich, Antioxidantien, umfassend sterisch gehinderte Phenole, sterisch gehinderte Amine, Lactone, dem Kompositwerkstoff zuzufügen, wobei damit verbesserte Werkstoffeigenschaften der Fensterbauteile erreicht werden.

Ebenso ist es möglich, dem Kompositwerkstoff Keimbildner bzw. Nukleierungsmittel, wie Kreide oder Talkum zuzusetzen, um so die Werkstoffeigenschaften günstig beeinflussen zu können, wobei vorteilhaft erhöhte Temperaturstabilitäten der Fensterbauteile resultieren.

Verschiedene Fensterbauteile können Weichmacher benötigen, die aus Phthalat und/oder Citrat und/oder Öl auswählbar sind.

Antistatika, wie bspw. epoxylierte Amine, Polyethylenglykolester, Glyzerinmono- und/oder - distearate, Alkylsulfonate eignen sich zur Ableitung von auf Fensterbauteilen bei der Herstellung und/oder Anwendung auftretender statischer Elektrizität.

Antibakteriell wirkende Stoffe, wie Silber und/oder Silberionen oder Kupferionen oder Triclosan werden im Kompositwerkstoff verwendet, wenn Fensterbauteile beispielsweise für hygienisch sensible Bereiche in der Wasser- und insbesondere Trinkwasserversorgungstechnik, der Luftversorgungstechnik, in der Lebensmittel-, Medizin-, Tiermedizin- oder Pharmatechnik, hergestellt werden sollen.

Als anorganische Fasern, die gemäß der vorliegenden Erfindung dem Kompositwerkstoff zugegeben werden können, eignen sich Glasfasern oder Gesteinsfasern, die natürlichen oder synthetischen Ursprungs sind.
Diese verstärken die Bauteile aus dem dieserart modifizierten Kompositwerkstoff beispielsweise in ihrer Zugfestigkeit. Ebenso verringern sie die Wärmeausdehnung.

Es lassen sich dem Kompositwerkstoff auch Riechstoffe, wie bspw. Ester und/oder Terpene und/oder Aldehyde und/oder Arylverbindungen, zusetzen, um so Fensterbauteile, die im Innenraum eines Gebäudes eingesetzt werden, einen angenehmen Geruch zu verleihen.

Der Kompositwerkstoff kann bei der Herstellung von für Fensterbau Bauteilen auch so verwendet werden, daß ein Fensterbauteil abschnittweise, beispielsweise in Form einer Schichtanordnung oder einer Sandwichstruktur, daraus besteht.

Damit gelingt es, die Eigenschaften des Kompositwerkstoffs entsprechend den Anforderungen für die Verwendung der daraus hergestellten Fensterbauteile durch Zugabe von Zusätzen und/oder durch Auswahl einer bestimmten Werkstoffanordnung exakt anzupassen.

Auf diese Weise ist ein Kompositwerkstoff erhältlich, der eine verbesserte Haftvermittlung zwischen lignocellulosischen Fasern und thermoplastischem Kunststoff aufweist, verbunden mit einer reduzierten Aufnahme von flüssigem und gasförmigem Wasser, wodurch die mechanisch-physikalischen Eigenschaften deutlich verbessert sind, und der dadurch für die Herstellung von Fensterbauteilen besser geeignet ist.

Erfindungsgemäß eignet sich der Kompositwerkstoff zur Verwendung für die Herstellung von Fensterbauteilen.
Diese können sein ein Blendrahmenprofil oder ein Flügelrahmenprofil oder ein Glasleistenprofil oder ein Bodenschwellenprofil oder ein Rollladenprofil oder ein Pfostenprofil oder ein Fassadenprofil.

Der Kompositwerkstoff eignet sich erfindungsgemäß auch zur Verwendung für die Herstellung von Fensterbauteilen, die im Innenbereich eines Gebäudes eingesetzt sind.

Diese können sein ein Sohlbankprofil oder ein Deckleistenprofil oder ein Blindpfostenprofil oder ein Stulpprofil oder ein Ausgleichsprofil oder ein Verstärkungsprofil oder ein Versteifungsprofil oder ein Eckpfostenprofil.

Der Kompositwerkstoff eignet sich erfindungsgemäß auch zur Verwendung für die Herstellung von Komponenten, die im Außenbereich eines Gebäudes eingesetzt sind.
Diese können sein ein Führungsprofil oder ein Verkleidungsprofil oder ein Fensterbankprofil oder ein Rollladenkastenprofil oder ein Blendenprofil oder ein Zargenblendenprofil.

Der Kompositwerkstoff kann zur Herstellung von Fensterbauteilen im Spritzgußverfahren oder im Blasverfahren oder im Extrusionsverfahren oder im Tiefziehverfahren oder im Thermoformverfahren oder in einer Kombination der genannten Verfahren verwendet werden.

## Patentansprüche

1. Verwendung eines Kompositwerkstoffs für Fensterbauteile, der aus folgenden Bestandteilen besteht:
a) lignocellulosische Fasern und thermoplastischen Kunststoff, wobei
b) die lignocellulosischen Fasern mit einer wässrigen Zusammensetzung behandelt sind, die ein Organopolysiloxan umfasst,
c) das zumindest ein wasserlösliches Aminoalkyltrialkoxysilan und zumindest ein wasserunlösliches Alkyltrialkoxysilan aufweist,
als Werkstoff für die Herstellung von für den Fensterbau bestimmten Innenbauteilen und/oder Außenbauteilen und/oder Funktionsbauteilen.

2. Verwendung eines Kompositwerkstoffs für den Fensterbau nach Anspruch 1, **dadurch gekennzeichnet, dass** das Organopolysiloxan zumindest ein wasserunlösliches Dialkyldialkoxysilan enthält.

3. Verwendung eines Kompositwerkstoffs für den Fensterbau nach Anspruch 1, **dadurch gekennzeichnet, dass** das wasserlösliche Aminoalkoxysilan die allgemeine Formel I
R-Si(R¹)_{y}(OR^{1*})_{3-y} (I)
hat und das wasserunlösliche Alkyltrialkoxysilan die allgemeine Formel II
R²-Si(OR^{1**})₃ (II),
wobei R¹, R^{1*} und R^{1**} unabhängig ein Methyl- oder Ethylrest ist, R² ein linearer, zyklischer oder verzweigter Alklyrest mit 1 bis 8 Kohlenstoffatomen ist und y = 0 oder 1 und wobei R eine primäre, sekundäre, tertiäre, bevorzugt quartäre aliphatische oder aromatische Aminogruppe ist.

4. Verwendung eines Kompositwerkstoffs für den Fensterbau nach einem der Ansprüche 2 oder 3, **dadurch gekennzeichnet, dass** das wasserunlösliche Dialkyldialkoxysilan die allgemeine Formel III
AA'-Si(OR^{1***)}₂ (III)
aufweist,
wobei R¹, R^{1*}, R^{1**} und R^{1***} unabhängig ein Methyl- oder Ethylrest ist, R² ein linearer, zyklischer oder verzweigter Alkylrest mit 1 bis 8 Kohlenstoffatomen, A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist.

5. Verwendung eines Kompositwerkstoffs nach einem der Ansprüche 1 oder 2, **dadurch gekennzeichnet, dass** das wasserlösliche Aminoalkoxysilan die allgemeine Formel I
R-Si(R¹)_{y}(OR^{1*})_{3-y} (I)
hat und das wasserunlösliche Alkyltrialkoxysilan die allgemeine Formel II
R²-Si(OR^{1**)}₃ (II),
wobei R eine aminofunktionelle organische Gruppe der allgemeinen Formel III
[Z_{(f+c·f*)}]^{(f+c·f*)-}[AdNH⁻_{(2+f-d)}[(CH₂)ₐNA¹ₑH⁻_{(1-e+f*)}]_{c}(CH₂)_{b}⁻]^{(f+c.f*)+} (III)
darstellt, bei der a und b 1 bis 6 sind, c 0 bis 6 ist, d und e 0 bis 2 sind, f und f* 0 bis 1 sind,
A und A¹ einen Benzyl- oder Vinylbenzylrest darstellen, N Stickstoff ist und Z ein einwertiger anorganischer oder organischer Säurerest ist,
wobei R¹, R^{1*} und R^{1**} einen Methyl- oder Ethylrest und
R² einen linearen, zyklischen oder verzweigten Alkylrest mit 1 bis 6 Kohlenstoffatomen oder eine Ureido-Alkylgruppe der allgemeinen Formel IV darstellt
NH₂-CO-NH-(CH₂)_{b}- (IV)
und y 0 bis 1 ist.

6. Verwendung eines Kompositwerkstoffs nach einem der vorangehenden Ansprüche, **dadurch gekennzeichnet, dass** das Organopolysiloxan 3-Aminopropyltriethoxysilan in Mischung mit Isobutyltriethoxysilan aufweist.

7. Verwendung eines Kompositwerkstoffs nach einem der vorangehenden Ansprüche, **dadurch gekennzeichnet, dass** der Kompositwerkstoff mindestens einen Zusatzstoff enthält.

8. Verwendung eines Kompositwerkstoffs nach Anspruch 7, **dadurch gekennzeichnet, dass** der Zusatzstoff ein mineralischer Füllstoff, ein Nanopartikel, ein Pigment, ein Leitfähigkeitsadditiv, ein Treibmittel bzw. Schaumbildner, ein Verarbeitungshilfsstoff, ein Thermostabilisator, ein externes und internes Gleitmittel bzw. Fließmittel, ein Lichtschutzmittel, ein Flammschutzmittel, ein Schlagzähmodifikator, ein Antioxidans, ein Nukleierungsmittel bzw. Keimbildner, ein Weichmacher, ein Antistatikum, ein antimikrobiell wirkender Stoff, eine anorganische Faser, ein Riechstoff ist.

9. Verwendung eines Kompositwerkstoffs nach Anspruch 8, **dadurch gekennzeichnet, dass** mehrere Zusatzstoffe als Mischung dem Kompositwerkstoff zugesetzt sind.

10. Verwendung eines Kompositwerkstoffs nach Anspruch 8, **dadurch gekennzeichnet, dass** der mineralische Füllstoff ein Calciumcarbonat, eine Silikatverbindung des Natriums, Kaliums, Calciums, Magnesiums (Talkum) und Aluminiums, Eisens, Zirkons ist, eine Kieselsäure oder ein Metallhydroxid, wie beispielsweise Magnesiumhydroxid oder Aluminiumhydroxid.

11. Verwendung eines Kompositwerkstoffs nach Anspruch 8, **dadurch gekennzeichnet, dass** die Pigmente aus Ruß und/oder Titandioxid und/oder Eisenoxid und/oder beschichtetem Glimmer und/oder Metallkomplexverbindungen bestehen.

12. Verwendung eines Kompositwerkstoffs nach Anspruch 8, **dadurch gekennzeichnet, dass** das Treibmittel / der Schaumbildner ein Azodicarbonamid oder ein Natriumhydrogencarbonat ist.

13. Verwendung eines Kompositwerkstoffs nach Anspruch 8, **dadurch gekennzeichnet, dass** der Verarbeitungshilfsstoff ein hochmolekulares Acryl-Polymer ist.

14. Verwendung eines Kompositwerkstoffs nach Anspruch 8, **dadurch gekennzeichnet, dass** der Stabilisator ein organisches Zinncarboxylat und/oder ein Zinnmercaptid und/oder eine Barium-Zink-Verbindung und/oder Tris(nonylphenyl)phosphit und/oder Tris(2,4-di-tert-butylphenyl)phosphit ist.

15. Verwendung eines Kompositwerkstoffs nach Anspruch 8, **dadurch gekennzeichnet, dass** das Gleit- oder Fließmittel ein Metallsalz, eine Fettsäure und/oder ein Wachs (Paraffin) und/oder ein Fettsäureester ist.

16. Verwendung eines Kompositwerkstoffs nach Anspruch 8, **dadurch gekennzeichnet, dass** das Lichtschutzmittel ein sterisch gehindertes Amin (HALS = Hindered Amine Light Stabilizer) ist.

17. Verwendung eines Kompositwerkstoffs nach Anspruch 8, **dadurch gekennzeichnet, dass** das Flammschutzmittel ein Deca-, Octa-, Pentabromdiphenylether oder ein Hexabromdiphenoxyethan oder ein Tetrabromphthalsäureanhydrid oder ein Tetrabromphthalsäurediol und -polyether oder ein Tetrabrombisphenol A (TBBA) ist.

18. Verwendung eines Kompositwerkstoffs nach Anspruch 8, **dadurch gekennzeichnet, dass** der Schlagzähmodifikator ein Acrylat ist.

19. Verwendung eines Kompositwerkstoffs nach Anspruch 8, **dadurch gekennzeichnet, dass** das Antioxidans ein sterisch gehindertes Phenol oder ein sterisch gehindertes Amin oder ein Lacton ist.

20. Verwendung eines Kompositwerkstoffs nach Anspruch 8, **dadurch gekennzeichnet, dass** das Nukleierungsmittel/Keimbilder Talkum oder Kreide ist.

21. Verwendung eines Kompositwerkstoffs nach Anspruch 8, **dadurch gekennzeichnet, dass** der Weichmacher ein Phthalat und/oder ein Citrat und/oder ein Öl ist.

22. Verwendung eines Kompositwerkstoffs nach Anspruch 8, **dadurch gekennzeichnet, dass** das Antistatikum ein epoxyliertes Amin oder ein Polyethylenglykolester oder ein Glyzerinmono- und/oder -distearat oder ein Alkylsulfonat ist.

23. Verwendung eines Kompositwerkstoffs nach Anspruch 8, **dadurch gekennzeichnet, dass** das antibakteriell wirkende Mittel Silber und/oder Silberionen oder Kupferionen oder Triclosan ist.

24. Verwendung eines Kompositwerkstoffs nach Anspruch 8, **dadurch gekennzeichnet, dass** das Leitfähigkeitsadditiv aus Graphit und/oder Metallteilchen ausgewählt ist.

25. Verwendung eines Kompositwerkstoffs nach Anspruch 8, **dadurch gekennzeichnet, dass** die anorganischen Fasern Glasfasern oder Gesteinsfasern sind.

26. Verwendung eines Kompositwerkstoffs nach Anspruch 8, **dadurch gekennzeichnet, dass** der Riechstoff ein Ester und/oder ein Terpen und/oder ein Aldehyd und/oder eine Arylverbindung und/oder ein Terpen ist.

27. Verwendung von lignocellulosischen Fasern in einem Kompositwerkstoff nach einem der vorangehenden Ansprüche, **dadurch gekennzeichnet, dass** die lignocellulosischen Fasern mit einem Organopolysiloxan, erhältlich durch Mischen wasserlöslicher Aminoalkylalkoxysilane der allgemeinen Formel I
R-Si(R¹)_{y}(OR^{1*})_{3-y} (I)
mit einem wasserunlöslichen Alkyltrialkoxysilan der allgemeinen Formel II
R²-Si(OR^{1**)}₃ (II)
und/oder einem wasserunlöslichen Dialkyldialkoxysilan der allgemeinen Formel III
AA'-Si(OR^{1***})₂ (III),
wobei R¹, R^{1*}, R^{1**} und R^{1***} unabhängig ein Methyl- oder Ethylrest ist, R² ein linearer, zyklischer oder verzweigter Alkylrest mit 1 bis 8 Kohlenstoffatomen, A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und y = 0 oder 1 und wobei R eine primäre, sekundäre, tertiäre, bevorzugt quartäre aliphatische oder aromatische Aminogruppe ist, kontaktiert worden sind und auf eine Temperatur oberhalb 80 °C erwärmt worden sind.

28. Verwendung von lignocellulosischen Fasern in einem Kompositwerkstoff nach einem der Ansprüche 1 bis 26, **dadurch gekennzeichnet, dass** die lignocellulosischen Fasern mit einem Organopolysiloxan, erhältlich durch Mischen wasserlöslicher Aminoalkylalkoxysilane der allgemeinen Formel I,
R-Si(R¹)_{y}(OR^{1*})_{3-y} (I)
mit einem wasserunlöslichen Alkyltrialkoxysilan der allgemeinen Formel II
R²-Si(OR^{1**)}₃ (II),
wobei R eine aminofunktionelle organische Gruppe der allgemeinen Formel III
[Z_{(f+c·f*)}]^{(f+c.f*)-}[A_{d}NH⁻_{(2+f-d)}[(CH₂)ₐNA¹ₑH⁻_{(i-e+f*)}]_{c}(CH₂)_{b}⁻]^{(f+c.f*)+} (III)
darstellt, bei der a und b 1 bis 6 sind, c 0 bis 6 ist, d und e 0 bis 2 sind, f und f* 0 bis 1 sind,
A und A¹ einen Benzyl- oder Vinylbenzylrest darstellen, N Stickstoff ist und Z ein einwertiger anorganischer oder organischer Säurerest ist,
wobei R¹, R^{1*} und R^{1**} einen Methyl- oder Ethylrest und
R² einen linearen, zyklischen oder verzweigten Alkylrest mit 1 bis 6 Kohlenstoffatomen oder eine Ureido-Alkylgruppe der allgemeinen Formel IV
NH₂-CO-NH-(CH₂)_{b}- (IV)
darstellt und y 0 bis 1 ist,
kontaktiert worden sind und auf eine Temperatur oberhalb 80 °C erwärmt worden sind.

29. Fensterbauteile aus einem Kompositwerkstoff zusammengesetzt gemäß einem oder mehreren der Ansprüche 1 bis 28, **dadurch gekennzeichnet, dass** das Fensterbauteil ein Blendrahmenprofil oder ein Flügelrahmenprofil oder ein Glasleistenprofil oder ein Bodenschwellenprofil oder ein Rollladenprofil oder ein Pfostenprofil oder ein Fassadenprofil ist.

30. Fensterbauteile aus einem Kompositwerkstoff zusammengesetzt gemäß einem oder mehreren der Ansprüche 1 bis 28, **dadurch gekennzeichnet, dass** das Fensterbauteil ein Sohlbankprofil oder ein Deckleistenprofil oder ein Blindpfostenprofil oder ein Stulpprofil oder ein Ausgleichsprofil oder ein Verstärkungsprofil oder ein Versteifungsprofil oder ein Eckpfostenprofil ist.

31. Fensterbauteile aus einem Kompositwerkstoff zusammengesetzt gemäß einem oder mehreren der Ansprüche 1 bis 28, **dadurch gekennzeichnet, dass** das Fensterbauteil ein Führungsprofil oder ein Verkleidungsprofil oder ein Fensterbankprofil oder ein Rollladenkastenprofil oder ein Blendenprofil oder ein Zargenblendenprofil ist.

32. Fensterbauteile aus einem Kompositwerkstoff nach einem der Ansprüche 29 bis 31, **dadurch gekennzeichnet, dass** diese im Spritzgußverfahren oder im Blasverfahren oder im Extrusionsverfahren oder im Tiefziehverfahren oder im Thermoformverfahren oder in einer Kombination der genannten Verfahren hergestellt sind.
